(19) Europäisches Patentamt
European Patent Office
Office européen des brevets

(11) EP 4 542 906 A1

(12) EUROPEAN PATENT APPLICATION
published in accordance with Art. 153(4) EPC

(43) Date of publication:
23.04.2025 Bulletin 2025/17

(21) Application number: 23823257.3

(22) Date of filing: 16.06.2023

(51) International Patent Classification (IPC):
H04L 5/00 (2006.01)

(52) Cooperative Patent Classification (CPC):
H04B 17/373; H04L 1/00; H04L 5/00

(86) International application number:
PCT/CN2023/100700

(87) International publication number:
WO 2023/241691 (21.12.2023 Gazette 2023/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.06.2022 CN 202210721441

(71) Applicant: Vivo Mobile Communication Co., Ltd.
Dongguan, Guangdong 523863 (CN)

(72) Inventors:
• WU, Hao
Dongguan, Guangdong 523863 (CN)
• LIU, Hao
Dongguan, Guangdong 523863 (CN)
• SUN, Peng
Dongguan, Guangdong 523863 (CN)
• TAMRAKAR, Rakesh
Dongguan, Guangdong 523863 (CN)

(74) Representative: Conti, Marco
Bugnion S.p.A.
Via di Corticella, 87
40128 Bologna (IT)

(54) **INFORMATION DETERMINATION METHOD AND APPARATUS, COMMUNICATION DEVICE AND READABLE STORAGE MEDIUM**

(57) The present application belongs to the technical field of communications. Disclosed are an information determination method and apparatus, a communication device and a readable storage medium. The information determination method in the embodiments of the present application comprises: a communication device determining that a reference resource associated with a CSI report is on a first time-domain unit, wherein the first time-domain unit comprises at least one time-domain unit located at least N time units after a first time-domain resource, the first time-domain resource being a time-domain resource where an uplink channel bearing the CSI report is located, and N being a positive integer.

A communication device determines that a reference resource associated with a CSI report is located in a first time domain unit

21

FIG. 2

EP 4 542 906 A1

**Description**

**CROSS-REFERENCE TO RELATED APPLICATIONS**

This application claims priority to Chinese Patent Application No. 202210721441.5, filed in China on June 16, 2022, which is incorporated herein by reference in its entirety.

**TECHNICAL FIELD**

This application pertains to the field of communications technologies and specifically relates to an information determining method and apparatus, a communication device, and a readable storage medium.

**BACKGROUND**

Channel state information (Channel State Information, CSI) measurement and reporting is an important technology for improving data transmission performance in communication systems. Using periodic or semi-persistent channel state information-reference signals (Channel State Information-Reference Signal, CSI-RS) for CSI prediction enables terminals and base stations to stably monitor channel quality and obtain reliable CSI. Currently however, for CSI reporting, a referred resource is configured/defined to be a slot prior to that for CSI reporting, which does not match the characteristic of CSI prediction. Therefore, how to properly configure referred resources for CSI is an urgent problem to be resolved at present.

**SUMMARY**

Embodiments of this application provide an information determining method and apparatus, a communication device, and a readable storage medium, so as to resolve the problem of how to properly configure referred resources for CSI.
According to a first aspect, an information determining method is provided. The method includes: determining, by a communication device, that a referred resource associated with a CSI report is located in a first time domain unit, where the first time domain unit includes at least one time domain unit that is at least N time units subsequent to a first time domain resource, and the first time domain resource is a time domain resource for an uplink channel carrying the CSI report, where N is a positive integer.
According to a second aspect, an information determining method is provided. The method includes: determining, by a communication device based on second signaling and/or a preset rule, whether a second resource can be used for mapping a first object; where the second resource is a resource occupied by a channel state information reference signal CSI-RS on a first resource or a first resource set, and the first object includes at least one of the following: a first channel and a first signal.
According to a third aspect, an information determining apparatus is provided. The apparatus includes: a first determining module, configured to determine that a referred resource associated with a CSI report is located in a first time domain unit, where the first time domain unit includes at least one time domain unit that is at least N time units subsequent to a first time domain resource, and the first time domain resource is a time domain resource for an uplink channel carrying the CSI report, where N is a positive integer.
According to a fourth aspect, an information determining apparatus is provided. The apparatus includes: a second determining module, configured to determine, based on second signaling and/or a preset rule, whether a second resource can be used for mapping a first object; where the second resource is a resource occupied by a channel state information reference signal CSI-RS on a first resource or a first resource set, and the first object includes at least one of the following: a first channel and a first signal.
According to a fifth aspect, a communication device is provided. The communication device includes a processor and a memory, and a program or instructions capable of running on the processor are stored on the memory. When the program or instructions are executed by the processor, the steps of the method according to the first aspect and/or the steps of the method according to the second aspect are implemented.
According to a sixth aspect, a communication device is provided, including a processor and a communication interface. The processor is configured to determine, based on second signaling and/or a preset rule, whether a second resource can be used for mapping a first object, where the second resource is a resource occupied by a channel state information reference signal CSI-RS on a first resource or a first resource set, and the first object includes at least one of the following: a first channel and a first signal; and/or the processor is configured to determine that a referred resource associated with a CSI report is located in a first time domain unit, where the first time domain unit includes at least one time domain unit that is at least N time units subsequent to a first time domain resource, and the first time domain resource is a time domain resource for an uplink channel carrying the CSI report, where N is a positive integer.

According to a seventh aspect, a communication system is provided, including a terminal and a network-side device, where the terminal and the network-side device can be configured to implement the steps of the information determining method according to the first aspect and/or the steps of the method according to the second aspect.

According to an eighth aspect, a readable storage medium is provided. A program or instructions are stored in the readable storage medium. When the program or instructions are executed by a processor, the steps of the method according to the first aspect and/or the steps of the method according to the second aspect are implemented.

According to a ninth aspect, a chip is provided. The chip includes a processor and a communication interface, where the communication interface is coupled to the processor, and the processor is configured to run a program or instructions to implement the steps of the method according to the first aspect and/or the steps of the method according to the second aspect.

According to a tenth aspect, a computer program/program product is provided. The computer program/program product is stored in a storage medium, and the computer program/program product is executed by at least one processor to implement the steps of the method according to the first aspect and/or the steps of the method according to the second aspect.

In embodiments of this application, it can be determined that a referred resource associated with a CSI report is located in a first time domain unit, where the first time domain unit includes at least one time domain unit that is at least N time units subsequent to a first time domain resource, and the first time domain resource is a time domain resource for an uplink channel carrying the CSI report. Therefore, the referred resource for CSI can be assigned to the time domain unit that is subsequent to the associated CSI report, so as to match the characteristic of CSI prediction, that is, the reported CSI predicts a CSI of a future moment.

## BRIEF DESCRIPTION OF DRAWINGS

FIG. 1 is a block diagram of a wireless communication system to which embodiments of this application are applicable;
FIG. 2 is a flowchart of an information determining method according to an embodiment of this application;
FIG. 3 is a first schematic diagram of a slot according to an embodiment of this application;
FIG. 4 is a second schematic diagram of a slot according to an embodiment of this application;
FIG. 5 is a flowchart of an information determining method according to an embodiment of this application;
FIG. 6A is one of schematic diagrams of indication signaling from a base station according to an embodiment of this application;
FIG. 6B is one of schematic diagrams of indication signaling from a base station according to an embodiment of this application;
FIG. 6C is one of schematic diagrams of indication signaling from a base station according to an embodiment of this application;
FIG. 7 is a schematic structural diagram of an information determining apparatus according to an embodiment of this application;
FIG. 8 is a schematic structural diagram of an information determining apparatus according to an embodiment of this application;
FIG. 9 is a schematic structural diagram of a communication device according to an embodiment of this application;
FIG. 10 is a schematic structural diagram of a terminal according to an embodiment of this application; and
FIG. 11 is a schematic structural diagram of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that the technologies described in the embodiments of this application are not limited to long term evolution (Long Term Evolution, LTE)/LTE-Advanced (LTE-Advanced, LTE-A) systems, and may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

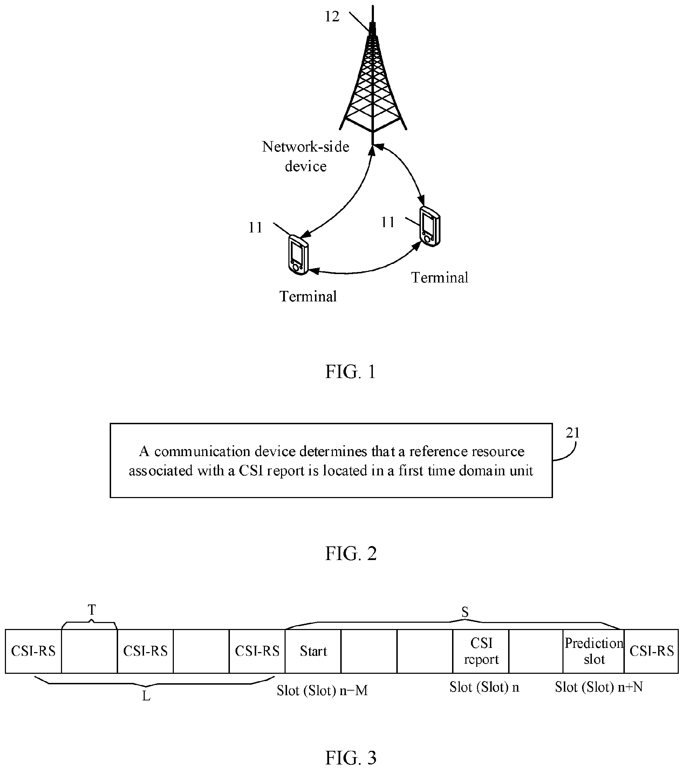

FIG. 1 is a block diagram of a wireless communication system to which embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), or pedestrian user equipment (Pedestrian User Equipment, PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

Optionally, the scenarios applicable to the embodiments of this application may include but are not limited to CSI measurement and reporting and CSI prediction and reporting. By using methods such as artificial intelligence (Artificial Intelligence, AI) and/or machine learning (Machine Learning, ML), a terminal can predict the CSI for one or more moments in the future by measuring a transmitted CSI-RS, and report the predicted CSI to a base station. In this way, the base station can obtain the CSI of the future moment, so as to solve the problem of performance loss caused by time-varying channels.

Optionally, the channel state information-reference signal (Channel State Information-Reference Signal, CSI-RS) in an embodiment of this application may be a periodic or semi-persistent CSI-RS. The periodic or semi-persistent CSI-RS may be transmitted periodically as configured by higher-layer signaling. For example, the higher-layer signaling is radio resource control (Radio Resource Control, RRC) signaling or medium access control (Medium Access Control, MAC) signaling. The periodic or semi-persistent CSI-RS belongs to a commonly used CSI-RS time domain type, and can be used for aperiodic, semi-persistent, or periodic CSI reporting. Using a periodic or semi-persistent CSI-RS for CSI prediction can enable terminals and base stations to stably monitor channel quality and obtain reliable CSI.

The referred resource for CSI is defined in a slot prior to the CSI report, which does not match the characteristic of CSI prediction, that is, the reported CSI should predict a CSI of a future moment. Therefore, an embodiment of this application provides a method for determining the referred resource for CSI, where the referred resource for CSI associated with a CSI report is located in at least one time domain unit that is at least N time units subsequent to the time domain resource for an uplink channel carrying the CSI report, where N is a positive integer and the time unit is, for example, a slot or an OFDM symbol. This matches the characteristic of CSI prediction, that is, the reported CSI predicts a CSI of a future moment.

The following describes in detail the information determining method and apparatus, communication device, and readable storage medium provided in the embodiments of this application by using some embodiments and application scenarios thereof, with reference to the accompanying drawings.

Referring to FIG. 2, FIG. 2 is a flowchart of an information determining method according to an embodiment of this application. The method is applied to a communication device, and the communication device may optionally be a terminal or a network-side device, where the network-side device is, for example, a base station. As shown in FIG. 2, the method includes the following steps.

Step 21. A communication device determines that a referred resource associated with a CSI report is located in a first time domain unit.

In this embodiment, the first time domain unit includes at least one time domain unit that is at least N time units subsequent to a first time domain resource, and the first time domain resource is a time domain resource for an uplink channel carrying the CSI report, where N is a positive integer. In other words, the first time domain unit is subsequent to the first time domain resource and is at least N time units apart from the first time domain resource. For example, the time unit is a slot or an orthogonal frequency division multiplexing (Orthogonal Frequency Division Multiplexing, OFDM) symbol.

In this case, the referred resource for CSI can be assigned to the time domain unit that is subsequent to the associated CSI report, so as to match the characteristic of CSI prediction, that is, the reported CSI predicts a CSI of a future moment.

Optionally, the time domain unit may include but is not limited to at least one of the following: slot, slot group, OFDM symbol, and OFDM symbol group. The slot group is formed by multiple consecutive or equally spaced slots, and the OFDM symbol group is formed by multiple consecutive or equally spaced OFDM symbols. For example, when the first time domain unit is a slot, an interval between the slot and the CSI report is N slots, or when the first time domain unit is a slot group, an interval between the 1st slot in the slot group and the CSI report is N slots, where the N slots may be multiple consecutive slot units or multiple slot units equally spaced by an integer number of slots. For another example, when the first time domain unit is an OFDM symbol, an interval between the OFDM symbol and the CSI report is N OFDM symbols, or when the first time domain unit is an OFDM symbol group, an interval between the 1st OFDM symbol in the OFDM symbol group and the CSI report is N OFDM symbols, where the N OFDM symbols may be multiple continuous OFDM symbol units or multiple OFDM symbol units equally spaced by an integer number of OFDM symbols.

Optionally, a value of N may be determined based on first signaling from a network-side device and/or terminal capability reporting signaling. The first signaling may include at least one of the following: higher-layer signaling, downlink control information (Downlink Control Information, DCI), and the like. For example, the higher-layer signaling is RRC signaling or MAC signaling.

For example, the value of N may be determined based on DCI triggering CSI. Further, the value of N may be determined based on at least one of the following in the DCI triggering CSI: dedicated field and CSI request field. That is, the value of N is determined based on the dedicated field and/or CSI request field in the DCI that triggers CSI.

It can be understood that CSI prediction allows terminals to report a CSI of one future moment, so as to mitigate the impact of time-varying channels on a base station trying to use the CSI for obtaining precodes or beams. In this case, the CSI reported by the terminal should correspond to a downlink transmission at a specific future moment. Therefore, the referred resource for CSI should be defined for a future moment. To be specific, the referred resource for CSI associated with the CSI report is located in N slots or OFDM symbols subsequent to the time domain resource for an uplink channel carrying the CSI report.

As shown in FIG. 3, FIG. 3 shows an example of referred resource definition for CSI prediction. For the CSI report in slot n, the referred resource for CSI is defined as a prediction slot, namely, slot n+N, where the value of N may be determined based on signaling from the base station or terminal capability signaling. For example, the value of N is indicated by higher-layer signaling or DCI. In some other examples, the CSI reported by a terminal can be used to predict channel states of multiple future times. The referred resource for CSI may be defined to be in multiple time domain units in a period of time following the CSI report, where the time domain units may be at least one of the following: slot, slot group, OFDM symbol, and OFDM symbol group.

In addition, a start position corresponding to the value of N, namely, the definition of the slot (or OFDM symbol) n, may be slot n earlier than the CSI report. For example, n indicates N0 slots (or OFDM symbols) earlier than the slot for the CSI report. For example, for the CSI report in slot n0, the referred resource for CSI is located in slot n0-N0+N, or in multiple time domain units since slot n0-N0+N. A value of N0 may be determined based on signaling from a network-side device and/or terminal capability reporting signaling. For example, the value of N0 is equal to or greater than a value of M below.

Optionally, in this embodiment of this application, a CSI-RS not later than a first time domain position is used for calculating the CSI report, and a CSI-RS later than the first time domain position is not used for calculating the CSI report, so that the terminal has sufficient time to include a predicted CSI in the CSI report. The first time domain position is a time domain position M time units prior to the time domain resource for the uplink channel carrying the CSI report. In other words, the first time domain position is prior to the time domain resource for the uplink channel carrying the CSI report and is M time units apart from the time domain resource for the uplink channel carrying the CSI report, where M is a positive integer.

Optionally, the value of M may be determined based on at least one of the following: signaling from a network-side device (for example, higher-layer signaling or DCI), terminal capability reporting signaling, and predefined information.

Optionally, the first time domain position and the referred resource for CSI are located at different time domain positions, so as to ensure the calculation of the CSI report.

It should be noted that after the referred resource for CSI is defined to be a future slot, the CSI-RS used for calculating the CSI report needs to further define the timing of the CSI report, so that the terminal has sufficient time to include a predicted CSI in the CSI report. Specifically, a target time domain position (namely, the first time domain position) needs to be defined, a CSI-RS not later than the target time domain position is used for calculating the CSI report, and a CSI-RS later than the target time domain position is not used for calculating the CSI report. The target time domain position and the referred resource for CSI may be located at different time domain positions. The target time domain position is M slots or OFDM symbols prior to the time domain resource for the uplink channel carrying the CSI report. For example, for the CSI report in slot n, the target time domain position is slot n-M. Alternatively, the target time domain position is M OFDM symbols apart from the 1st (or the last) OFDM symbol occupied by the uplink channel carrying the CSI report.

Further, the value of M may be fixed or determined based on agreed rules. The value of M may also be determined based on signaling from the base station, for example, determined based on the number of CSI-RS resources configured by the base station or a type of the CSI report. The value of M may also be determined based on terminal capability reporting signaling. For example, the value of M may be determined based on $Z_1$ or $Z'_1$ in Table 1 below which is determined based on the terminal capability reporting signaling, or may be determined based on at least one of $Z_1$, $Z'_1$, $Z_2$, $Z'_2$, $Z_3$, and $Z'_3$ in Table 2 below which is determined based on the terminal capability reporting signaling. Table 1 shows delay requirement 1 for CSI calculation, Table 2 shows delay requirement 2 for CSI calculation, and $X_i$ and $KB_i$ in Table 2 are determined based on the terminal capability reporting signaling. For example, if subcarrier spacing information is "1" and the CSI calculation delay determined based on the terminal capability reporting signaling is $Z_1$ in Table 1, that is, "13 symbols", then the value of M may be 13 symbols. For another example, if subcarrier spacing information is "3" and the CSI calculation delay determined based on the terminal capability reporting signaling is $Z_2$ in Table 2, that is, "152 symbols", then the value of M may be 152 symbols. Alternatively, the unit of M is slot, and the value of M is determined based on the number of slots converted from at least one of $Z_1$, $Z'_1$, $Z_2$, $Z'_2$, $Z_3$, and $Z'_3$ in Table 1 or Table 2. For example, at least one of $Z_1$, $Z'_1$, $Z_2$, $Z'_2$, $Z_3$, and $Z'_3$ is divided by the number of OFDM symbols in one slot (for example, 14) and the result is rounded (up or down) to obtain the value of M.

**Table 1**

| Subcarrier spacing information | $Z_1$ [symbols] | |
|---|---|---|
| | $Z_1$ | $Z'_1$ |
| 0 | 10 | 8 |
| 1 | 13 | 11 |
| 2 | 25 | 21 |
| 3 | 43 | 36 |

**Table 2**

| Subcarrier spacing information | $Z_1$ [symbols] | | $Z_2$ [symbols] | | $Z_3$ [symbols] | |
|---|---|---|---|---|---|---|
| | $Z_1$ | $Z'_1$ | $Z_2$ | $Z'_2$ | $Z_3$ | $Z'_3$ |
| 0 | 22 | 16 | 40 | 37 | 22 | $X_0$ |
| 1 | 33 | 30 | 72 | 69 | 33 | $X_1$ |
| 2 | 44 | 42 | 141 | 140 | $\min(44, X_2 + KB_1)$ | $X_2$ |
| 3 | 97 | 85 | 152 | 140 | $\min(97, X_3 + KB_2)$ | $X_3$ |
| 5 | 388 | 340 | 608 | 560 | $\min(388, X_5 + KB_3)$ | $X_5$ |
| 6 | 776 | 680 | 1216 | 1120 | $\min(776, X_6 + KB_4)$ | $X_6$ |

In some other examples, the time corresponding to a CSI report needs to be defined flexibly, and the CSI report may need to correspond to past time or future time. In this example, the value of N in the foregoing method may be flexibly configured by the base station, and the value may be positive or negative. In other words, the referred resource for CSI associated with the CSI report is located in N slots or OFDM symbols subsequent to or prior to the time domain resource for the uplink channel carrying the CSI report.

In the embodiment of this application, regarding the CSI-RS for CSI reporting, periodic or semi-persistent CSI-RS configuration parameters can be optimized to enhance the measurement performance or reduce the CSI-RS overhead.

Optionally, a CSI-RS configuration parameter associated with the CSI report may include at least one of L, S, and T. L, S, and T are positive integers, where L is the number of consecutive CSI-RS transmission occasions in a first transmission occasion set, S is the number of time units between two adjacent first transmission occasion sets, and T is the number of time units between two adjacent CSI-RS transmission occasions in the first transmission occasion set. The first transmission occasion set refers to a set of CSI-RS transmission occasions. The time unit is, for example, a slot or an OFDM symbol. In this way, CSI-RS transmission occasions can be configured flexibly using L, S, and/or T in the CSI-RS configuration parameters. For example, L can be used to configure multiple consecutive CSI-RS transmission occasions in the CSI-RS transmission occasion set, so as to ensure the measurement performance by adding CSI-RS transmission occasions. For another example, S and T can be used to flexibly configure an interval between adjacent CSI-RS transmission occasions, so as to reduce the CSI-RS overhead.

Optionally, S is an integer greater than or equal to M+N.

For example, L, S, and T in the CSI-RS configuration parameters associated with the CSI report may be as shown in FIG. 3, where L is the number of consecutive CSI-RS transmission occasions in a transmission occasion set, S is the number of slots or OFDM symbols between two adjacent transmission occasion sets, and T is the number of slots or OFDM symbols between two adjacent CSI-RS transmission occasions in a transmission occasion set.

Optionally, multiple CSI-RS resource combinations can be configured to enhance the measurement performance. Specifically, CSI-RS resource configuration associated with the CSI report may include K CSI-RS resources, and the K CSI-RS resources are associated with P CSI-RS resource combinations, where K and P are positive integers.

Optionally, each CSI-RS resource combination may contain at least one of the following: one CSI-RS resource set and part of resources in one CSI-RS resource set.

Optionally, the CSI-RS resources included in each CSI-RS resource combination can be determined based on at least one of the following.

(1) Identifier of a CSI-RS resource combination associated with the CSI-RS resource configuration. For example, network-side signaling may be used to configure the identifier of the CSI-RS resource combination associated with the CSI-RS resource configuration. For example, four CSI-RS resources, namely, CSI-RS resources 0, 1, 2, and 3, are associated with two CSI-RS resource combinations, CSI-RS resources 0 and 3 are configured to be associated with CSI-RS resource combination 1, and CSI-RS resources 1 and 2 are associated with CSI-RS resource combination 2. If the identifier of a CSI-RS resource combination is "1", it can be determined that CSI-RS resources 0 and 3 are included; if the identifier of a CSI-RS resource combination is "2", it can be determined that CSI-RS resources 1 and 2 are included.

(2) Sequence of CSI-RS resources in the CSI-RS resource configuration. For example, four CSI-RS resources, are sequentially configured as CSI-RS resources 0, 1, 2, and 3, and the four CSI-RS resources are associated with two CSI-RS resource combinations. In this case, the 1st and 2nd CSI-RS resources are associated with CSI-RS resource combination 1, and the 3rd and 4th CSI-RS resources are associated with CSI-RS resource combination 2. According to the sequence of CSI-RS resources, it can be determined that the CSI-RS resource combination corresponding to identifier "1" includes CSI-RS resources 0 and 1, and the CSI-RS resource combination corresponding to identifier "2" includes CSI-RS resources 2 and 3.

Optionally, a resource selection indicator in the CSI report may be associated with $K/P$ resources contained in each CSI-RS resource combination, so as to reduce the overhead for the resource selection indicator. For example, the resource selection indicator in the CSI report may be associated with $K/P$ resources contained in the 1st CSI-RS resource combination.

Further, a bit width of the resource selection indicator in the CSI report may be $\left\lceil \log_2 \frac{K}{P} \right\rceil$, where $\lceil \ \rceil$ is a symbol for rounding up.

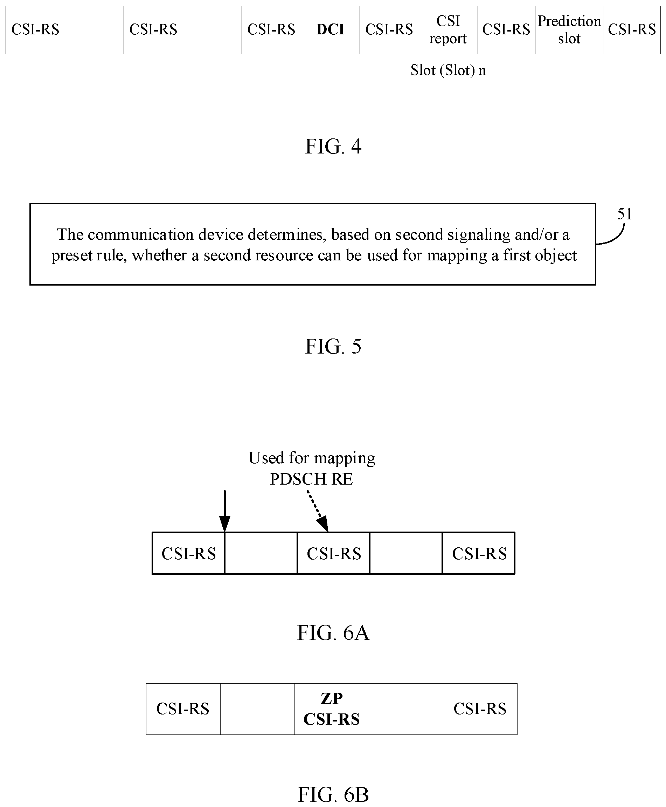

When processing a periodic or semi-persistent CSI-RS, a terminal needs to cache sampling points on the CSI-RS or processing results of the sampling points for calculating the CSI report. During CSI prediction, the terminal needs to calculate a CSI of a future moment based on the CSI-RSs measured at multiple moments. Therefore, the terminal needs to cache the CSI-RS sampling points in multiple CSI-RS transmission occasions or the processing results of the sampling points. This will increase the storage and calculation complexity of the terminal. Especially when the periodic or semi-persistent CSI-RS is used to calculate an aperiodic CSI report, the aperiodic CSI report is dynamically triggered by the base station through DCI signaling. As shown in FIG. 4, the terminal cannot predict when the base station will trigger the CSI report, so the terminal needs to be always prepared for calculating the CSI report, resulting in serious problems in storage space and complexity.

Regarding the problems above, one possible solution is increasing the occupation time of the CSI processing unit (CSI Processing Unit, CPU) for CSI reports, and the other solution may be increasing the number of active CSI-RS resources or ports occupied by CSI reports. In this way, the calculation or storage complexity required for the terminal can be accurately acquired by a network-side device, for example, a base station. The network-side device, for example, the base station, can adapt triggering, activation, or configuration of CSI and CSI-RS to the processing capability of the terminal, so as to reduce the CSI processing complexity of the terminal and control the storage overhead required by the terminal for CSI calculation.

Optionally, to increase the CPU occupation time for CSI report, the CPU occupation time for CSI reports may begin at the 1st time unit of a fourth resource in the J-th CSI-RS transmission occasion prior to the first time domain position or the referred resource for CSI, and end at the transmission of the CSI report, where the first time domain position is a time domain position M time units prior to the time domain resource for the uplink channel carrying the CSI report. In other words, the first time domain position is prior to the time domain resource for the uplink channel carrying the CSI report and is M time units apart from the time domain resource for the uplink channel carrying the CSI report. Optionally, the referred resource for CSI may be the referred resource described in the foregoing embodiment. The fourth resource may include a CSI-RS resource and/or CSI-IM resource. M is a positive integer, and J is a positive integer.

Optionally, a value of J may be determined based on terminal capability reporting signaling and/or signaling from a network-side device. The value of J may also be a preset fixed value.

Optionally, to increase the number of active CSI-RS resources or ports occupied by CSI reports, each CSI-RS resource associated with the CSI report may be counted as Q active CSI-RS resources, or each CSI-RS port associated with the CSI report may be counted as Q active CSI-RS ports, where Q is a positive integer.

Optionally, a value of Q may be determined based on terminal capability reporting signaling and/or signaling from a network-side device. The value of Q may also be a preset fixed value.

In some embodiments, the values of J and/or Q may also be related to configuration signaling of the base station, for example, code configuration parameters of the base station. For example, the values of J and/or Q may be determined based on a proportional value of a codebook configuration parameter, or determined by adding a proportional value of a codebook configuration parameter to the value determined based on terminal capability reporting signaling, where the proportional value can be reported through the terminal capability signaling.

Referring to FIG. 5, FIG. 5 is a flowchart of an information determining method according to an embodiment of this application. The method is applied to a communication device, and the communication device may be a terminal or a network-side device, where the network-side device is, for example, a base station. As shown in FIG. 5, the method includes the following steps.

Step 51. The communication device determines, based on second signaling and/or a preset rule, whether a second resource can be used for mapping a first object.

In this embodiment, the second resource is a resource occupied by a CSI-RS on a first resource or a first resource set. The first object includes at least one of the following: a first channel and a first signal. That a second resource can be used to map a first object can be understood as canceling transmission and measurement of CSI-RSs in the second resource and transmitting the first object by using the second resource.

Optionally, the second signaling may be signaling from a network-side device, for example, downlink control information (Downlink Control Information, DCI) or media access control control element (Media Access Control Control Element, MAC CE). The second signaling may be used to indicate at least one of the following:

the resource occupied by a CSI-RS cannot be used for mapping the first channel;
the resource occupied by a CSI-RS cannot be used for mapping the first signal;
the resource occupied by a CSI-RS be used be used for mapping the first channel; and
the resource occupied by a CSI-RS be used be used for mapping the first signal.

Optionally, the first channel may include but is not limited to at least one of a physical downlink shared channel (Physical Downlink Shared Channel, PDSCH) and a physical uplink shared channel (Physical Uplink Shared Channel, PUSCH).

Optionally, the first signal may include but is not limited to a zero power (Zero Power, ZP) CSI-RS.

Optionally, the preset rule may be pre-agreed, defined by a protocol, and/or configured by a network side. For example, the network-side device, for example, a base station, may send the preset rule to a terminal through signaling.

For example, the preset rule may be that the resource occupied by the CSI-RS on the first resource or the first resource set can be used for mapping the first object. According to the preset rule, it can be directly determined that the resource occupied by the CSI-RS on the first resource or the first resource set can be used for mapping the first object. Further, resources occupied by CSI-RSs not on the first resource or the first resource set cannot be used for mapping the first object.

For another example, in a case that the second signaling is received and the second signaling indicates that the resource occupied by the CSI-RS on the first resource or the first resource set can be used for mapping the first object, it can be determined that the resource occupied by the CSI-RS on the first resource or the first resource set can be used for mapping the first object. In a case that the received second signaling indicates that the resource occupied by the CSI-RS on the first resource or the first resource set cannot be used for mapping the first object, it is determined that the resource occupied by the CSI-RS on the first resource or the first resource set cannot be used for mapping the first object.

In the information determining method according to this embodiment of this application, whether a second resource can be used for mapping a first object can be determined based on second signaling and/or a preset rule, where the second resource is a resource occupied by a CSI-RS on a first resource or a first resource set, and the first object includes at least one of the following: a first channel and a first signal. Therefore, the resources occupied by CSI-RSs on some resources can be used by other channels and/or signals. This can reduce the CSI-RS overhead and improve the transmission performance of data channels when a periodic or semi-persistent CSI-RS is used for CSI measurement.

For example, during CSI prediction, the terminal predicts and reports a CSI of a future moment, so that the base station can obtain the channel state of a future time point. For periodic or semi-persistent CSI reporting, CSI-RSs on some CSI-RS transmission occasions (or transmission periods) are no longer needed after the terminal predicts a CSI of a specific future moment. Therefore, CSI-RS transmissions or measurements on these resources can be canceled, meaning that the resources occupied by the CSI-RSs on these resources are mapped to other channels and/or signals, so as to reduce the CSI-RS overhead and terminal complexity.

In some embodiments, the terminal can cancel the reception or measurement of CSI-RS resource elements (Resource Element, RE) on some resources based on predefined rules or signaling from the base station, and these CSI-RS REs can be used for mapping resources of other channels or signals, for example, PDSCH or PUSCH RE mapping or conversion into a ZP CSI-RS or other signals.

In some embodiments, indication signaling of the base station (for example, DCI or MAC CE) may indicate at least one of the following three states for CSI-RS REs on some resources:

state 1: CSI-RS RE not canceled, meaning that the CSI-RS RE cannot be used for resource mapping of PDSCH or other channels (for example, PUSCH) or signals;
state 2: CSI-RS RE canceled, meaning that the CSI-RS RE can be used for resource mapping of PDSCH or other channels (for example, PUSCH); and
state 3: CSI-RS RE canceled and converted into a ZP CSI-RS RE. Alternatively, the CSI-RS RE may also be converted into other signal resources, for example, at least one of interference measurement resources including resources for channel state information-interference measurement (Channel State Information - Interference Measurement, CSI-IM) and non-zero-power (Non-zero-power, NZP)-based CSI-RS interference measurement.

Further, in an embodiment, a candidate value of the indication signaling from the base station may include only state 1 or state 2. Furthermore, whether state 3 is included can be determined based on configuration signaling from the base station or terminal capability signaling.

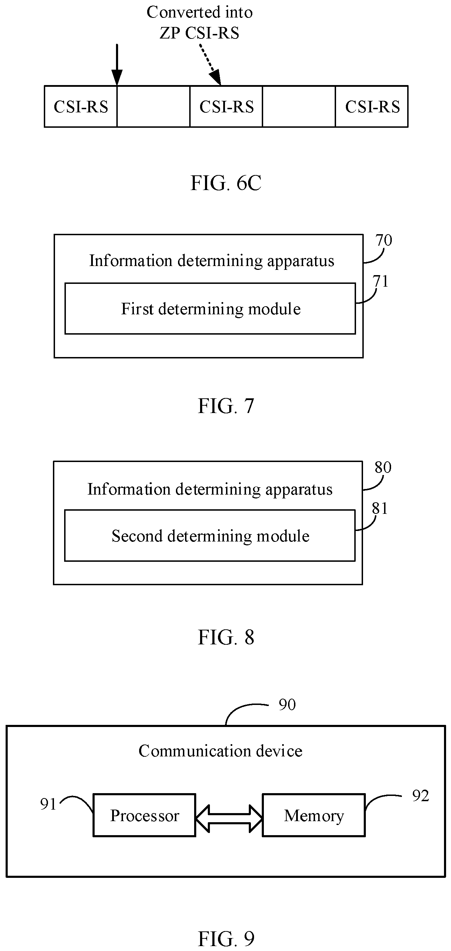

For example, FIG. 6A, FIG. 6B, and FIG. 6C show an example of the indication signaling from the base station. In this example, UE1 predicts a CSI of a future moment by using the AI/ML algorithm, so the base station can cancel some CSI-RS transmissions and measurements for UE1. To reduce the CSI-RS overhead of the base station, a set of CSI-RS configuration is shared among UE1, UE2, and UE3. Therefore, canceling the CSI-RS for UE1 will affect UE2 and UE3. This example is described in detail below.

(1) As shown in FIG. 6A, the base station instructs that the CSI-RS RE canceled for UE1 is used for PDSCH RE mapping to improve the transmission performance of PDSCHs of UE1.
(2) As shown in FIG. 6B, the CSI-RS periodicity for UE2 is longer than that for UE1 and UE3, for example, twice the CSI-RS periodicity for UE1 and UE3. In this case, periodic ZP CSI-RS resources can be configured in a position where UE2 does not receive the CSI-RS to cover the CSI-RS RE there, so as to reduce the interference of CSI-RS on UE2. In this way, UE2 is not affected by PDSCH mapping with the CSI-RS RE canceled for UE1.
(3) A CSI-RS resource is originally shared between UE3 and UE1 with the same period. The base station instructs that the CSI-RS RE for UE1 is used for PDSCH RE mapping. This affects the CSI-RS measurement for UE3. As shown in FIG. 6C, the CSI-RS for UE3 can be converted into a ZP CSI-RS through this indication signaling, so as to prevent the PDSCH transmission for UE1 from affecting the CSI-RS measurement for UE3.

Based on the analysis above, the indication signaling from the base station containing these three states can reduce the RS overhead of the target UE and increase the PDSCH transmission resources of the target UE, without affecting the technical effects of other UEs.

In an embodiment of this application, the first resource or the first resource set may include but is not limited to at least one of the following: a CSI-RS transmission occasion, a CSI-RS periodicity, a CSI-RS resource, an orthogonal frequency division multiplexing (Orthogonal Frequency Division Multiplexing, OFDM) symbol containing CSI-RS, a slot resource containing CSI-RS, a frequency domain resource containing CSI-RS, and a first channel resource scheduled by the network-side device.

Optionally, the first resource or the first resource set may be determined based on at least one of the following: third signaling of the network-side device (for example, the base station) and a predefined rule. For example, the first resource or the first resource set is in a time window indicated by the third signaling, a CSI-RS transmission occasion selected from a time resource set or time window based on the third signaling, an OFDM symbol containing CSI-RS, a slot resource containing CSI-RS, or a resource selected from one or more resource sets based on the third signaling.

Optionally, the third signaling may include at least one of the following: higher-layer signaling and downlink control information DCI. For example, the higher-layer signaling is RRC signaling or MAC signaling.

Optionally, the first resource or the first resource set may include a CSI-RS transmission occasion between a second time domain resource and a third time domain resource. The second time domain resource includes at least one of the following: (1) the time unit for the DCI triggering a CSI report; (2) the time unit for the uplink channel carrying the CSI report; and (3) S time units prior to the time unit for the uplink channel carrying the CSI report, where S is a positive integer. The third time domain resource includes at least one of the following: (1) the time unit for the uplink channel carrying the CSI report; (2) the time unit for the referred resource corresponding to the CSI report, or X time units subsequent to the time unit (for example, slot or OFDM symbol) for the uplink channel carrying the CSI report, where X is a positive integer; and (3) the time unit corresponding to the CSI reported by the CSI report. The time unit is, for example, a slot or an OFDM symbol.

In some embodiments, the second time domain resource is the time unit for the DCI triggering the CSI report, and the third time domain resource is one of the following: the time unit for the uplink channel carrying the CSI report, the time unit for the referred resource corresponding to the CSI report, and the time unit corresponding to the CSI reported by the CSI report.

In some other embodiments, the second time domain resource is the time unit for the uplink channel carrying the CSI report, and the third time domain resource is one of the following: the time unit for the referred resource corresponding to the CSI report and the time unit corresponding to the CSI reported by the CSI report.

In some other embodiments, the second time domain resource is S time units prior to the time unit for the uplink channel carrying the CSI report, and the third time domain resource is one of the following: the time unit for the uplink channel carrying the CSI report, the time unit for the referred resource corresponding to the CSI report, and the time unit corresponding to the CSI reported by the CSI report.

Optionally, for the resources in the first resource or the first resource set, canceling a resource occupied by the CSI-RS based on granularity (for example, a CSI-RS RE) may include but is not limited to at least one of the following:

(1) with the CSI-RS transmission occasion as the granularity, canceling CSI-RS REs in one or more CSI-RS transmission occasions at a time, meaning that the CSI-RS REs in one or more CSI-RS transmission occasions can be used for mapping other channels or signals;

(2) with the CSI-RS periodicity as the granularity, canceling CSI-RS REs in one or more CSI-RS periodicities at a time, meaning that the CSI-RS REs in one or more CSI-RS periodicities can be used for mapping other channels or signals;

(3) with the CSI-RS resource as the granularity, canceling CSI-RS REs on one or more CSI-RS resources in one or more CSI-RS sets at a time, meaning that the CSI-RS REs on one or more CSI-RS resources can be used for mapping other channels or signals;

(4) with the OFDM symbol as the granularity, canceling CSI-RS REs in one or more OFDM symbols at a time, meaning that the CSI-RS REs on one or more OFDM symbols can be used for mapping other channels or signals;

(5) with the slot as the granularity, canceling CSI-RS REs in one or more slots at a time, meaning that the CSI-RS REs in one or more slots can be used for mapping other channels or signals;

(6) with the frequency domain resource as the granularity, canceling CSI-RS REs on one or more frequency domain resources at a time, meaning that the CSI-RS REs on one or more frequency domain resources can be used for mapping other channels or signals; where the frequency domain resource may be a subband, a resource block (Resource Block, RB), a resource block group (Resource Block Group, RBG), a resource element group (Resource Element Group, REG), or the like; and

(7) with the PDSCH allocation resource as the granularity, canceling CSI-RS REs contained in a scheduled PDSCH resource at a time, meaning that the CSI-RS REs contained in the scheduled PDSCH resource can be used for mapping other channels or signals.

It should be noted that (1) to (7) can be used in combination. For example, the CSI-RS REs on one or more CSI-RS resources in one or more CSI-RS transmission occasions are canceled at a time, or the CSI-RS REs on one or more CSI-RS resources in one or more slots (or OFDM symbols) are canceled at a time.

Further, specific methods for canceling a CSI-RS RE on a resource based on the resource location may include at least one of the following:

(1) canceling the CSI-RS REs within a time window, for example, canceling the CSI-RS REs in all CSI-RS transmission occasions (or periodicities, OFDM symbols, and slots) within a time window; where the start time position, length, or end time position of the time window can be determined based on signaling from the base station or an agreed rule;

(2) canceling the CSI-RS REs on a part of time resources selected from a time window or time resource set, for example, after a time window is determined, selecting, based on signaling from the base station (for example, bitmap signaling), a part of resources from the transmission occasions (or periodicities, OFDM symbols, or slots) contained in the time window, and canceling the CSI-RS REs on the part of resources;

(3) canceling the CSI-RS REs on a part of CSI-RS resources selected from one or more CSI-RS resource sets; and

(4) canceling the CSI-RS REs contained in PDSCH resources scheduled by the base station through signaling.

It should be noted that (1) to (4) can be used in combination. The signaling from the base station may be higher-layer signaling (for example, RRC or MAC signaling) or physical-layer signaling (for example, DCI).

In addition, the method for canceling a CSI-RS may also be determined based on a predefined rule. For example, regarding a CSI report (for example, a CSI report of a specific codebook type or feedback type), the CSI-RS REs from the start time position to the end time position need to be canceled. The start time position is at least one of the following: (1) the slot or OFDM symbol for the DCI triggering the CSI report; (2) the slot or OFDM symbol for the uplink channel carrying the CSI report; and (3) $S$ slots or OFDM symbols prior to the slot or OFDM symbol for the uplink channel carrying the CSI report. The end time position is at least one of the following: (1) the slot or OFDM symbol for the uplink channel carrying the CSI report; (2) the slot or OFDM symbol for the referred resource for CSI corresponding to the CSI report, or $X$ slots or OFDM symbols subsequent to the slot or OFDM symbol for the uplink channel carrying the CSI report, where $X$ is a positive integer; (3) the slot or OFDM symbol corresponding to the CSI reported by the CSI report.

Optionally, the second signaling may include at least one of the following.

(1) Uplink scheduling DCI, namely, the DCI used for scheduling uplink channels. The DCI herein can be used for scheduling uplink channels, but this does not mean that an uplink channel transmission has been actually scheduled by the DCI.

In (1), a mapping state of the resource occupied by the CSI-RS may be indicated by at least one of the following in the uplink scheduling DCI: dedicated field and CSI request (request) field. Specifically, the mapping state of the resource occupied by the CSI-RS may be indicated by adding a dedicated field to the uplink scheduling DCI or decoding again an existing field, or through joint encoding with an existing field, for example, the CSI request field.

Further, when the mapping state of the resource occupied by the CSI-RS is indicated by the CSI request field in the uplink scheduling DCI, the mapping state of the resource occupied by the CSI-RS can be configured in CSI trigger states (CSI trigger states). In addition, the foregoing time window information, resource information, and the like may also be configured by using the uplink scheduling DCI.

(2) Downlink scheduling DCI, namely, the DCI used for scheduling downlink channels. The DCI herein can be used for scheduling downlink channels, but this does not mean that a downlink channel transmission has been actually scheduled by the DCI.

In (2), the mapping state of the resource occupied by the CSI-RS can be indicated by at least one of the following in the downlink scheduling DCI: dedicated field, resource allocation field, and ZP CSI-RS indicator field. Specifically, the mapping state of the resource occupied by the CSI-RS may be indicated by adding a dedicated field to the downlink scheduling DCI or decoding again an existing field, or through joint encoding with an existing field, for example, the resource allocation field or the ZP CSI-RS indicator field.

Further, when the mapping state of the resource occupied by the CSI-RS is indicated by the resource allocation field in the downlink scheduling DCI, the mapping state of the resource occupied by CSI-RS can be configured in resource allocation states. Alternatively, when the mapping state of the resource occupied by the CSI-RS is indicated by the ZP CSI-RS indicator field in the downlink scheduling DCI, the mapping state of the resource occupied by CSI-RS can be configured in ZP CSI-RS states. In addition, the foregoing time window information, resource information, and the like may also be configured by using the downlink scheduling DCI.

(3) Group common (Group common) DCI.

In (3), the mapping state of the resource occupied by the CSI-RS can be indicated by a dedicated field in the group common DCI. Specifically, the mapping state of the resource occupied by the CSI-RS can be indicated by a dedicated field after a group common DCI format is added.

(4) Media access control control element MAC CE.

It should be noted that the mapping state of the resource occupied by the CSI-RS may optionally be at least one of the following: the resource occupied by the CSI-RS cannot be used for mapping the first channel; the resource occupied by the CSI-RS cannot be used for mapping the first signal; the resource occupied by the CSI-RS can be used for mapping the first channel; and the resource occupied by the CSI-RS can be used for mapping the first signal.

In the embodiment of this application, a time limit needs to be set regarding the CSI-RS RE cancellation indicated by the base station. For example, the CSI-RS REs at least F slots or OFDM symbols subsequent to the slot or OFDM symbol for the indication signaling from the base station can be used for mapping other channels or signals. In other words, the second resource is subsequent to the time unit for the first signaling, and is at least F time units apart from the time unit for the first signaling, where F is a positive integer. The time unit is, for example, a slot or an OFDM symbol.

Optionally, in a case that the canceled CSI-RS is a semi-persistent CSI-RS, the terminal does not receive the second signaling in a first time period, or the terminal ignores the second signaling. In this case, the network-side device can transmit the second signaling. Alternatively, in the first time period, the network-side device does not transmit the second signaling. A starting point of the first time period is the sending time or feedback time of fourth signaling, where the fourth signaling is used to activate the semi-persistent CSI-RS. A duration of the first time period is G time units, where G is a positive integer.

For example, the terminal cannot receive the indication signaling from the base station for canceling a CSI-RS within G time units after transmission of the signaling (for example, MAC CE signaling or DCI signaling) for activating the semi-persistent CSI-RS or acknowledgement/negative acknowledgement (ACK/NACK) of the signaling. In one example, G is an integer number of OFDM symbols or slots; and in another example, G is a duration measured in ms, for example, 3 ms. Similarly, the UE cannot receive the indication from the base station for canceling a CSI-RS within G time units after transmission of signaling (for example, MAC CE signaling or DCI signaling) for deactivating the semi-persistent CSI-RS or acknowledgement/negative acknowledgement (ACK/NACK) of the signaling. In one example, G is an integer number of OFDM symbols or slots; and in another example, G is a duration measured in ms, for example, 3 ms.

Optionally, the terminal may report to the network-side device information of the recommended first resource or first resource set, for the purpose of efficient configuration. For example, the terminal may report the information of the recommended CSI-RS RE to be canceled in a CSI report, for example, CSI-RS resource or port information, or time window or resource location information of the CSI-RS RE to be canceled.

Optionally, the CSI-RS cancellation may affect the occupation of CSI processing units (CPU) and calculation of active CSI-RS resources (for example, ports) of the terminal. Therefore, the resource (for example, a port) that is occupied by the CSI-RS and can be used for mapping the first object, namely, the canceled CSI-RS resource (for example, a port), is not included in occupation of the CSI processing unit (CSI Processing Unit, CPU) or active CSI-RS resources (for example, ports).

In some further examples, the CSI-RS mentioned in the foregoing CSI-RS cancellation methods can be used for CSI reporting, performance monitoring, quasi-colocation (Quasi-Colocation, QCL) source, model life cycle management, and the like.

Optionally, the foregoing CSI-RS cancellation methods are applicable to various CSI report types, including the channel quality indicator (Channel Quality Indicator, CQI) report, precoding matrix indicator (Precoding Matrix Indicator, PMI) report, channel state information-reference signal resource index (CSI-RS Resource Index, CRI) report, layer 1 reference signal receiving power (Layer 1-Reference Signal Receiving Power, L1-RSRP) report, layer 1 reference signal received quality (Layer 1-Reference Signal Received Quality, L1-RSRQ) report, rank indicator (Rank Indicator, RI) report, layer indicator (Layer Indicator, LI) report, and the like.

The information determining method provided in the embodiment of this application may be executed by an information determining apparatus. An information determining apparatus provided in an embodiment of this application is described by assuming that the information determining method in this embodiment of this application is performed by the information determining apparatus.

Referring to FIG. 7, FIG. 7 is a schematic structural diagram of an information determining apparatus according to an embodiment of this application. The apparatus is applied to a communication device, and the communication device may optionally be a terminal or a network-side device. As shown in FIG. 7, the information determining apparatus 70 includes:

a first determining module 71, configured to determine that a referred resource associated with a CSI report is located in a first time domain unit, where the first time domain unit includes at least one time domain unit that is at least N time units subsequent to a first time domain resource, and the first time domain resource is a time domain resource for an uplink channel carrying the CSI report, where N is a positive integer.

Optionally, the time domain unit includes at least one of the following:

slot, slot group, OFDM symbol, and OFDM symbol group.

Optionally, a value of N is determined based on first signaling from a network-side device and/or terminal capability reporting signaling.

Optionally, the first signaling includes at least one of the following: higher-layer signaling and DCI.

When the first signaling includes DCI triggering CSI, the value of N is determined based on at least one of the following in the DCI triggering CSI: dedicated field and CSI request field.

Optionally, a CSI-RS not later than a first time domain position is used for calculating the CSI report, and a CSI-RS later than the first time domain position is not used for calculating the CSI report; where the first time domain position is a time domain position M time units prior to the time domain resource for the uplink channel carrying the CSI report, where M is a positive integer.

Optionally, a value of M be determined based on at least one of the following: signaling from a network-side device, terminal capability reporting signaling, and predefined information.

Optionally, the first time domain position and the referred resource are located at different time domain positions.

Optionally, a CSI-RS configuration parameter associated with the CSI report include at least one of L, S, and T. L, S, and T are positive integers, where L is the number of consecutive CSI-RS transmission occasions in a first transmission occasion set, S is the number of time units between two adjacent first transmission occasion sets, and T is the number of time units between two adjacent CSI-RS transmission occasions in the first transmission occasion set.

Optionally, CSI-RS resource configuration associated with the CSI report includes K CSI-RS resources, and the K CSI-RS resources are associated with P CSI-RS resource combinations, where K and P are positive integers.

Optionally, each CSI-RS resource combination includes at least one of the following: one CSI-RS resource set and part of resources in one CSI-RS resource set.

Optionally, CSI-RS resources included in each CSI-RS resource combination are determined based on at least one of the following:

identifier of a CSI-RS resource combination associated with the CSI-RS resource configuration; and
sequence of CSI-RS resources in the CSI-RS resource configuration.

Optionally, a resource selection indicator in the CSI report is associated with $K/P$ resources contained in each of the CSI-RS resource combinations.

Optionally, a bit width of the resource selection indicator in the CSI report is $\left\lceil \log_2 \frac{K}{P} \right\rceil$.

Optionally, CPU occupation time of the CSI report begins at the 1st time unit of a fourth resource in the J-th CSI-RS transmission occasion prior to the first time domain position or the referred resource, and ends at the transmission of the CSI report; where the first time domain position is a time domain position M time units prior to the time domain resource for the uplink channel carrying the CSI report, and the fourth resource includes a CSI-RS resource and/or a channel state information interference measurement CSI-IM resource, where M is a positive integer and J is a positive integer.

Optionally, a value of J is determined based on terminal capability reporting signaling and/or signaling from a network-side device.

Optionally, each CSI-RS resource associated with the CSI report is counted as Q active CSI-RS resources, or each CSI-RS port associated with the CSI report is counted as Q active CSI-RS ports, where Q is a positive integer.

Optionally, a value of Q is determined based on terminal capability reporting signaling and/or signaling from a network-side device.

The information determining apparatus 70 provided in the embodiment of this application can implement the processes implemented by the method embodiment illustrated in FIG. 2, with the same technical effects achieved. To avoid repetition, details are not described herein again.

Referring to FIG. 8, FIG. 8 is a schematic structural diagram of an information determining apparatus according to an embodiment of this application. The apparatus is applied to a communication device, and the communication device may optionally be a terminal or a network-side device. As shown in FIG. 8, the information determining apparatus 80 includes:

a second determining module 81, configured to determine, based on second signaling and/or a preset rule, whether a second resource can be used for mapping a first object; where the second resource is a resource occupied by a channel state information reference signal CSI-RS on a first resource or a first resource set, and the first object includes at least one of the following: a first channel and a first signal.

Optionally, the second signaling is used to indicate at least one of the following:

the resource occupied by a CSI-RS cannot be used for mapping the first channel;
the resource occupied by a CSI-RS cannot be used for mapping the first signal;
the resource occupied by a CSI-RS can be used for mapping the first channel; and

the resource occupied by a CSI-RS can be used for mapping the first signals.

Optionally, the first channel includes at least one of the following: PDSCH and PUSCH.

Optionally, the first signal includes a zero power ZP CSI-RS.

Optionally, the first resource or the first resource set includes at least one of the following: a CSI-RS transmission occasion, a CSI-RS periodicity, a CSI-RS resource, an OFDM symbol containing CSI-RS, a slot resource containing CSI-RS, a frequency domain resource containing CSI-RS, and a first channel resource scheduled by the network-side device.

Optionally, the first resource or the first resource set is determined based on at least one of the following:

third signaling from the network-side device; and
a predefined rule.

Optionally, the third signaling includes at least one of the following: higher-layer signaling and downlink control information DCI.

Optionally, the first resource or the first resource set includes a CSI-RS transmission occasion between a second time domain resource and a third time domain resource. The second time domain resource includes at least one of the following: the time unit for the DCI triggering a channel state information CSI report; the time unit for the uplink channel carrying the CSI report; and S time units prior to the time unit for the uplink channel carrying the CSI report, where S is a positive integer. The third time domain resource includes at least one of the following: the time unit for the uplink channel carrying the CSI report; the time unit for the referred resource corresponding to the CSI report; and the time unit corresponding to the CSI reported by the CSI report.

Optionally, the second resource is subsequent to the time unit for the second signaling, and is at least F time units apart from the time unit for the second signaling, where F is a positive integer. The time unit is, for example, a slot or an OFDM symbol.

Optionally, the second signaling includes at least one of the following:

uplink scheduling DCI;
downlink scheduling DCI;
group common DCI; and
media access control control element MAC CE.

Optionally, when the second signaling contains an uplink scheduling DCI, a mapping state of the resource occupied by the CSI-RS is indicated by at least one of the following in the uplink scheduling DCI: dedicated field and CSI request field;

when the second signaling contains a downlink scheduling DCI, a mapping state of the resource occupied by the CSI-RS is indicated by at least one of the following in the downlink scheduling DCI: dedicated field, resource allocation field, and ZP CSI-RS indicator field; and

when the second signaling contains a group common DCI, a mapping state of the resource occupied by the CSI-RS is indicated by a dedicated field in the group common DCI.

Optionally, when the mapping state of the resource occupied by the CSI-RS is indicated by the CSI request field in the uplink scheduling DCI, the mapping state of the resource occupied by the CSI-RS is configured in CSI trigger states;

when the mapping state of the resource occupied by the CSI-RS is indicated by the resource allocation field in the downlink scheduling DCI, the mapping state of the resource occupied by the CSI-RS is configured in resource allocation states; and

when the mapping state of the resource occupied by the CSI-RS is indicated by the ZP CSI-RS indicator field in the downlink scheduling DCI, the mapping state of the resource occupied by the CSI-RS is configured in ZP CSI-RS states.

Optionally, the terminal may report information of the recommended first resource or the first resource set.

Optionally, the resource occupied by the CSI-RS is not included in occupation of the CSI processing unit CPU, or the resource occupied by the CSI-RS is not included in active CSI-RS resources.

The information determining apparatus 80 provided in the embodiment of this application can implement the processes implemented by the method embodiment illustrated in FIG. 5, with the same technical effects achieved. To avoid repetition, details are not described herein again.

Optionally, as shown in FIG. 9, an embodiment of this application further provides a communication device 90 including a processor 91 and a memory 92, and a program or instructions are stored in the memory 92 and capable of running on the processor 91. For example, in a case that the communication device 90 is a terminal, when the program or instructions are executed by the processor 91, the steps in the foregoing embodiments of the information determining method are implemented, with the same technical effects achieved. In a case that the communication device 90 is a network-side device, when the program or instructions are executed by the processor 91, the steps in the forgoing embodiments of the information determining method are implemented, with the same technical effects achieved. To avoid repetition, details are not described herein again.

An embodiment of this application further provides a communication device, including a processor and a communication interface. The processor is configured to determine, based on second signaling and/or a preset rule, whether a second resource can be used for mapping a first object, where the second resource is a resource occupied by a channel state information reference signal CSI-RS on a first resource or a first resource set, and the first object includes at least one of the following: a first channel and a first signal; and/or the processor is configured to determine that a referred resource associated with a CSI report is located in a first time domain unit, where the first time domain unit includes at least one time domain unit that is at least N time units subsequent to a first time domain resource, and the first time domain resource is a time domain resource for an uplink channel carrying the CSI report, where N is a positive integer. The device embodiment is corresponding to the foregoing information determining method embodiments. All the implementation processes and implementation methods of the foregoing method embodiments can be applied to the device embodiment, with the same technical effects achieved. To avoid repetition, details are not described herein again.

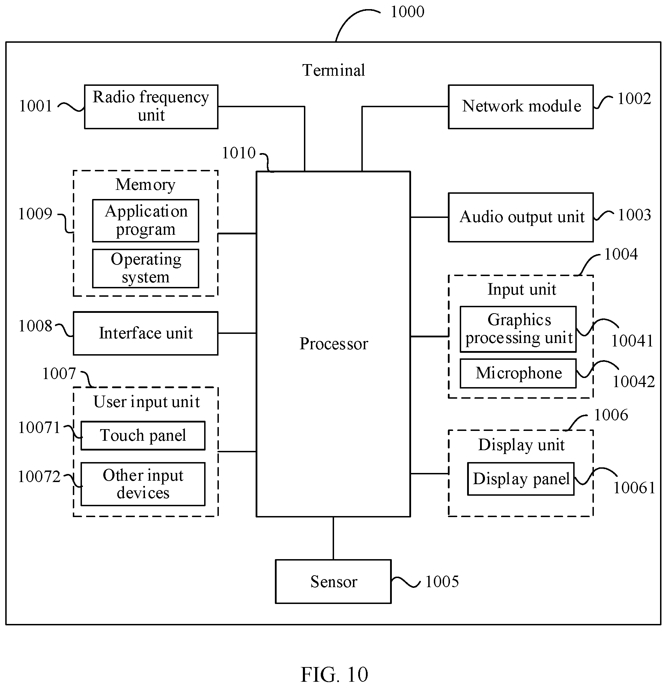

Specifically, FIG. 10 is a schematic diagram of a hardware structure of a terminal implementing the embodiments of this application.

The terminal 1000 includes but is not limited to at least some components of a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power source (for example, a battery) for supplying power to the components. The power source may be logically connected to the processor 1010 through a power management system. In this way, functions such as charge management, discharge management, and power consumption management are implemented by using the power management system. The structure of the terminal shown in FIG. 10 does not constitute a limitation on the terminal. The terminal may include more or fewer components than shown in the figure, or combine some components, or have a different component arrangement. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (for example, a camera) in a video capture mode or an image capture mode. The display unit 1006 may include a display panel 10061. The display panel 10061 may be configured in a form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a functional button (such as a volume control button or a power on/off button), a trackball, a mouse, and a joystick. Details are not described herein again.

In the embodiments of this application, after receiving downlink data from the network-side device, the radio frequency unit 1001 may transmit it to the processor 1010 for processing. In addition, the radio frequency unit 1001 may transmit uplink data to the network-side device. Generally, the radio frequency unit 1001 includes but is not limited to an antenna, an amplifier, a transceiver, a coupler, a low noise amplifier, a duplexer, and the like.

The memory 1009 may be configured to store software program or instructions, and various data. The memory 1009 may mainly include a first storage area where the program or instructions are stored and a second storage area where data is stored. The first storage area may store an operating system, an application program or instructions required by at least one function (for example, an audio playing function or an image playing function), and the like. Further, the memory 1009 may include a volatile memory or non-volatile memory, or the memory 1009 may include both volatile and non-volatile memories. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in this embodiment of this application includes but is not limited to these and any other suitable types of memories.

The processor 1010 may include one or more processing units. Optionally, the processor 1010 integrates an application processor and a modem processor. The application processor mainly processes operations involving an operating system, a user interface, an application program, and the like. The modem processor mainly processes wireless communication signals, for example, a baseband processor. It can be understood that the modem processor may alternatively be not integrated in the processor 1010.

The processor 1010 is configured to determine, based on second signaling and/or a preset rule, whether a second resource can be used for mapping a first object, where the second resource is a resource occupied by a channel state information reference signal CSI-RS on a first resource or a first resource set, and the first object includes at least one of the following: a first channel and a first signal; and/or the processor 1010 is configured to determine that a referred resource associated with a CSI report is located in a first time domain unit, where the first time domain unit includes at least one time domain unit that is at least N time units subsequent to a first time domain resource, and the first time domain resource is a time domain resource for an uplink channel carrying the CSI report, where N is a positive integer.

The terminal 1000 provided in this embodiment of this application can implement the processes implemented in the foregoing information determining method embodiments, with the same technical effects achieved. To avoid repetition, details are not described herein again.

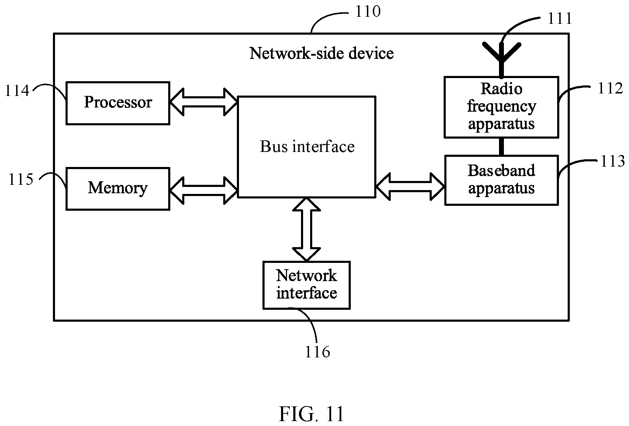

Specifically, an embodiment of this application further provides a network-side device. As shown in FIG. 11, the network-side device 110 includes an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information by using the antenna 111, and transmits the received information to the baseband apparatus 113 for processing. In a downlink direction, the baseband apparatus 113 processes to-be-transmitted information, and transmits the information to the radio frequency apparatus 112; and the radio frequency apparatus 112 processes the received information and then transmits the information by using the antenna 111.

The method performed by the network-side device in the foregoing embodiment may be implemented in the baseband apparatus 113, and the baseband apparatus 113 includes a baseband processor.

For example, the baseband apparatus 113 may include at least one baseband processing unit, where a plurality of chips are disposed on the baseband processing unit. As shown in FIG. 11, one of the chips is, for example, the baseband processor, and connected to the memory 115, to invoke a program in the memory 115 to perform the operations of the network device shown in the foregoing method embodiment.

The network-side device may further include a network interface 116, where the interface is, for example, a common public radio interface (common public radio interface, CPRI).

Specifically, the network-side device 110 according to the embodiment of this application further includes a program or instructions stored in the memory 115 and capable of running on the processor 114. The processor 114 invokes the program or instructions in the memory 115 to implement the method performed by each module shown in FIG. 7 and/or FIG. 8, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing embodiments of the information determining method are implemented, with the same technical effects achieved. To avoid repetition, details are not described herein again.

The processor is the processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip, where the chip includes a processor and a communication interface, the communication interface is coupled to the processor, and the processor is configured to run a program or instructions to implement the processes of the foregoing embodiments of the information determining method, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a storage medium. The computer program/program product is executed by at least one processor to implement the processes of the foregoing embodiments of the information determining method, with the same technical effects achieved. To avoid repetition, details are not described herein again.

An embodiment of this application further provides a communication system, including a terminal and a network-side device, where the terminal and the network-side device can be configured to implement the steps of the information determining method according to the first aspect and/or the steps of the method according to the second aspect.

Persons of ordinary skill in the art may realize that units and algorithm steps of various examples described with reference to the embodiments disclosed in this specification can be implemented by using electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this disclosure.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

**In** the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

When implemented in a form of a software functional unit and sold or used as an independent product, the functions may be stored in a computer-readable storage medium. Based on such an understanding, the technical solutions of this disclosure essentially, or the part contributing to related technologies, or some of the technical solutions may be embodied in a form of a software product. The computer software product is stored in a storage medium, and includes instructions for enabling a computer device (which may be a personal computer, a server, a network device, or the like) to perform all or some of the steps of the methods described in the embodiments of this disclosure. The foregoing storage medium includes: any medium that can store program code, such as a USB flash drive, a removable hard disk, a ROM, a RAM, a magnetic disk, or an optical disc.

A person of ordinary skill in the art may understand that all or some of the processes of the methods in the embodiments may be implemented by a computer program controlling relevant hardware. The program may be stored in a computer readable storage medium. When the program runs, the processes of the method embodiments may be included. The storage medium may be a magnetic disk, an optical disk, a read-only memory (Read-Only Memory, ROM), a random access memory (Random Access Memory, RAM), or the like.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a computer software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. An information determining method, comprising:
   determining, by a communication device, that a referred resource associated with a CSI report is located in a first time domain unit, wherein the first time domain unit comprises at least one time domain unit that is at least N time units subsequent to a first time domain resource, and the first time domain resource is a time domain resource for an uplink channel carrying the CSI report, wherein N is a positive integer.

2. The method according to claim 1, wherein the time domain unit comprises at least one of the following: slot, slot group, OFDM symbol, and OFDM symbol group.

3. The method according to claim 1, wherein a value of N is determined based on first signaling from a network-side device and/or terminal capability reporting signaling.

4. The method according to claim 3, wherein the first signaling comprises at least one of the following: higher-layer signaling and DCI.

5. The method according to claim 4, wherein when the first signaling comprises DCI triggering CSI, the value of N is determined based on at least one of the following in the DCI triggering CSI: dedicated field and CSI request field.

6. The method according to claim 1, wherein a CSI-RS not later than a first time domain position is used for calculating the CSI report, and a CSI-RS later than the first time domain position is not used for calculating the CSI report; wherein the first time domain position is a time domain position M time units prior to the time domain resource for the uplink channel carrying the CSI report, wherein M is a positive integer.

7. The method according to claim 6, wherein a value of M is determined based on at least one of the following: signaling from a network-side device, terminal capability reporting signaling, and predefined information.

8. The method according to claim 6, wherein the first time domain position and the referred resource are located at different time domain positions.

9. The method according to claim 1, wherein a CSI-RS configuration parameter associated with the CSI report comprises at least one of L, S, and T; wherein
   L, S and T are positive integers, wherein L is the number of consecutive CSI-RS transmission occasions in a first transmission occasion set, S is the number of time units between two adjacent first transmission occasion sets, and T is the number of time units between two adjacent CSI-RS transmission occasions in the first transmission occasion set.

10. The method according to claim 1, wherein CSI-RS resource configuration associated with the CSI report comprises K CSI-RS resources, and the K CSI-RS resources are associated with P CSI-RS resource combinations, wherein K and P are positive integers.

11. The method according to claim 10, wherein each of the CSI-RS resource combinations contains at least one of the following: one CSI-RS resource set and part of resources in one CSI-RS resource set.

12. The method according to claim 10, wherein the CSI-RS resources contained in each of the CSI-RS resource combinations are determined based on at least one of the following:

    identifier of a CSI-RS resource combination associated with the CSI-RS resource configuration; and
    sequence of CSI-RS resources in the CSI-RS resource configuration.

13. The method according to claim 10, wherein a resource selection indicator in the CSI report is associated with $K/P$ resources contained in each of the CSI-RS resource combinations.

14. The method according to claim 13, wherein a bit width of the resource selection indicator in the CSI report is

$$\left\lceil \log_2 \frac{K}{P} \right\rceil.$$

15. The method according to claim 1, wherein CPU occupation time of the CSI report begins at the 1st time unit of a fourth resource in the J-th CSI-RS transmission occasion prior to the first time domain position or the referred resource, and ends at the transmission of the CSI report; wherein the first time domain position is a time domain position M time units prior to the time domain resource for the uplink channel carrying the CSI report, and the fourth resource comprises a CSI-RS resource and/or a channel state information interference measurement CSI-IM resource, wherein M is a positive integer and J is a positive integer.

16. The method according to claim 15, wherein a value of J is determined based on terminal capability reporting signaling and/or signaling from a network-side device.

17. The method according to claim 1, wherein each CSI-RS resource associated with the CSI report is counted as Q active CSI-RS resources, or each CSI-RS port associated with the CSI report is counted as Q active CSI-RS ports, wherein Q is a positive integer.

18. The method according to claim 17, wherein a value of Q is determined based on terminal capability reporting signaling and/or signaling from a network-side device.

19. An information determining apparatus, comprising:
a first determining module, configured to determine that a referred resource associated with a CSI report is located in a first time domain unit, wherein the first time domain unit comprises at least one time domain unit that is at least N time units subsequent to a first time domain resource, and the first time domain resource is a time domain resource for an uplink channel carrying the CSI report, wherein N is a positive integer.

20. A communication device, comprising a processor and a memory, wherein the memory stores a program or instructions capable of running on the processor, and when the program or instructions are executed by the processor, the steps of the information determining method according to any one of claims 1 to 18 are implemented.

21. A readable storage medium, wherein the readable storage medium stores a program or instructions, and when the program or instructions are executed by a processor, the steps of the information determining method according to any one of claims 1 to 18 are implemented.

Network-side
device

12

11  11

Terminal

Terminal

FIG. 1

A communication device determines that a reference resource
associated with a CSI report is located in a first time domain unit

21

FIG. 2

| CSI-RS | | CSI-RS | | CSI-RS | Start | | | CSI report | | Prediction slot | CSI-RS |

T
S
L
Slot (Slot) n−M  Slot (Slot) n  Slot (Slot) n+N

FIG. 3

| CSI-RS | | CSI-RS | | CSI-RS | **DCI** | CSI-RS | CSI report | CSI-RS | Prediction slot | CSI-RS |
|---|---|---|---|---|---|---|---|---|---|---|

Slot (Slot) n

## FIG. 4

The communication device determines, based on second signaling and/or a preset rule, whether a second resource can be used for mapping a first object  51

## FIG. 5

Used for mapping PDSCH RE

| CSI-RS | | CSI-RS | | CSI-RS |
|---|---|---|---|---|

## FIG. 6A

| CSI-RS | | **ZP CSI-RS** | | CSI-RS |
|---|---|---|---|---|

## FIG. 6B

Converted into
ZP CSI-RS

| CSI-RS | | CSI-RS | | CSI-RS |

FIG. 6C

Information determining apparatus 70

First determining module 71

FIG. 7

Information determining apparatus 80

Second determining module 81

FIG. 8

90

Communication device

91 Processor ⟷ Memory 92

FIG. 9

1000

Terminal

1001 — Radio frequency unit

Network module — 1002

1010

Memory
1009 — Application program
Operating system

Processor

Audio output unit — 1003

1004
Input unit
Graphics processing unit — 10041
Microphone — 10042

1008 — Interface unit

1007
User input unit
10071 — Touch panel
10072 — Other input devices

1006
Display unit
Display panel — 10061

Sensor — 1005

FIG. 10

FIG. 11

## INTERNATIONAL SEARCH REPORT

International application No.

**PCT/CN2023/100700**

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, ENTXTC, DWPI, CNKI, IEEE, 3GPP: 信道状态信息, 信道状态信息参考信号, 预测, 模型, 训练, CSI, CSI-RS, prediction, model, training

**C. DOCUMENTS CONSIDERED TO BE RELEVANT**

| Category* | Citation of document, with indication, where appropriate, of the relevant passages | Relevant to claim No. |
|---|---|---|
| X | CN 113302870 A (HUAWEI TECHNOLOGIES CO., LTD.) 24 August 2021 (2021-08-24) description, paragraphs 74-194 | 1-21 |
| X | CN 114402560 A (QUALCOMM INC.) 26 April 2022 (2022-04-26) description, paragraphs 47-146 | 1-21 |
| X | CN 110034792 A (RESEARCH INSTITUTE OF CHINA MOBILE COMMUNICATIONS CORP. et al.) 19 July 2019 (2019-07-19) description, paragraphs 50-140 | 1-21 |
| X | CN 110912588 A (HANGZHOU DIANZI UNIVERSITY) 24 March 2020 (2020-03-24) description, paragraphs 47-90 | 1-21 |
| A | WO 2021204208 A1 (VIVO MOBILE COMMUNICATION CO., LTD.) 14 October 2021 (2021-10-14) entire document | 1-21 |
| A | ZTE. "R1-2203270 "Evaluation assumptions for CSI, simultaneous multi-panel UL transmission and 8-Tx UL operation"" *3GPP TSG RAN WG1 Meeting #109-e*, 29 April 2022 (2022-04-29), entire document | 1-21 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 July 2023** | **14 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/100700**

| Patent document cited in search report | | | Publication date (day/month/year) | Patent family member(s) | | | Publication date (day/month/year) |
|---|---|---|---|---|---|---|---|
| CN | 113302870 | A | 24 August 2021 | WO | 2020155119 | A1 | 06 August 2020 |
| | | | | CN | 115834017 | A | 21 March 2023 |
| CN | 114402560 | A | 26 April 2022 | EP | 4032219 | A1 | 27 July 2022 |
| | | | | US | 2021091838 | A1 | 25 March 2021 |
| | | | | WO | 2021055510 | A1 | 25 March 2021 |
| CN | 110034792 | A | 19 July 2019 | | None | | |
| CN | 110912588 | A | 24 March 2020 | | None | | |
| WO | 2021204208 | A1 | 14 October 2021 | CN | 113517967 | A | 19 October 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210721441